# EUROPÄISCHE PATENTSCHRIFT

(11) **EP 1 636 566 B1**
(45) Veröffentlichungstag und Bekanntmachung des Hinweises auf die Patenterteilung: **02.05.2007**
(21) Anmeldenummer: 04740219.3
(22) Anmeldetag: 23.06.2004
(51) Int. Cl.: G01N 1/42, B01L 3/00

(54) **PROBENAUFNAHMEENIRICHTUNG UND VERFAHREN ZU DEREN HERSTELLUNG**
SAMPLE HOLDING DEVICE AND METHOD FOR THE PRODUCTION THEREOF
DISPOSITIF POUR CONTENIR DES ECHANTILLONS ET PROCEDE DE PRODUCTION CORRESPONDANT

(30) Priorität: 26.06.2003 DE 10328869
(43) Veröffentlichungstag der Anmeldung: 22.03.2006
(73) Patentinhaber: Fraunhofer-Gesellschaft zur Förderung der angewandten Forschung e.V., 80686 München (DE)
(72) Erfinder: FUHR, Günter, 13187 Berlin (DE); ZIMMERMANN, Heiko c/o Fraunhofer-Institut, 66386 St. Inbert (DE); FIXEMER, Thomas, 66424 Homburg (DE)
(74) Vertreter: Hertz, Oliver
(86) Internationale Anmeldenummer: PCT/EP2004/006800
(87) Internationale Veröffentlichungsnummer: WO 2005/001439

(56) Entgegenhaltungen:
- WO-A-96/02801
- DE-A- 10 144 925
- US-A- 4 262 494
- US-A- 6 033 880

## Beschreibung

Die Erfindung betrifft Probenaufnahmeeinrichtungen mit den Merkmalen des Oberbegriffs von Anspruch 1. Die Erfindung betrifft auch Verfahren zur Herstellung und/oder zur Anwendung derartiger Probenaufnahmeeinrichtungen.

Die Kryokonservierung ist ein allgemein bekanntes Verfahren zur Haltbarmachung insbesondere biologisch (oder medizinisch) relevanter Materialien. Diese Materialien umfassen bspw. Zellaggregate, Gewebe und Organe, Körperflüssigkeiten oder auch einzelne Zellen oder Zellbestandteile, insbesondere im gelösten oder suspendierten Zustand. Die Kryokonservierung erfolgt nach bestimmten Prozeduren in Behältern oder auf Substraten, deren Gestalt an die Probe mit dem biologischen Material angepasst ist. Behälter zur Kryokonservierung sind bspw. für Gewebe und Organe (siehe DE-OS 199 22 31, EP-A 0 853 238, DE-OS 197 25 768, DE-OS 199 05 163), für Blutkomponenten (siehe z. B. DE-OS 198 26 350) und für zell- oder tropfenförmige Kryoproben (siehe z. B. US-A-5 275 016, EP-B 0 475 409, DE-OS 199 21 236, EP-B 0 804 073) bekannt.

DE10144925 offenbart auch eine Probenaufnahmeeinrichtung, insbesondere zur Kryokonservierung mindestens einer Probe, umfassend: Ein Bündel aus einer Vielzahl von schlauchförmigen, flexiblen Probenkammern und eine Halteeinrichtung, mit der das Bündel der Probenkammern verbunden ist.

Generell besteht bei der Kryokonservierung biologischer Proben ein Interesse daran, Behälter zur Probenaufnahme schnell und ohne einen besonderen Aufwand zu beschicken. Des Weiteren sollen die Behälter technologisch einfach und billig als Massenprodukt herstellbar sein. Diese Anforderungen werden insbesondere durch schlauchförmige Probenkammern erfüllt, die leicht befüllbar und im tiefgefrorenen Zustand zerlegbar, fraktionierbar oder anderweitig teilbar sind.

Beispielsweise ist aus DE 102 51 668 bekannt, mehrere schlauchförmige Probenkammern an einem Halterahmen zu befestigen. Dieser Aufbau besitzt den Nachteil, dass die Probenkammer bei praktisch sinnvollen Rahmengrößen eine sehr geringe Aufnahmekapazität besitzen. Nachteilig kann ferner sein, dass zur Beschickung der Probenkammern ggf. ein Hilfsgerät erforderlich ist. In DE 102 51 668 wird auch vorgeschlagen, die Probenkammern 10' in Form von Bündeln zu verwenden (siehe Figur 7). Ein Ende des Bündels ist an einer Halterung 20' befestigt, an der die Probenkammern beispielsweise hängend in einen Kryotank eingehängt werden. In die Halterung 20' ist ferner ein Datenspeicher zur Speicherung von Probendaten integriert. Weitere Datenspeicher können entlang der Länge des Bündels befestigt sein.

Die herkömmlichen schlauchförmigen Probenkammern haben den weiteren Nachteil, das für eine platzsparende und stabile Lagerung ein Aufwickeln, ein mäanderförmiges Auslegen auf einem Substrat o. dgl. erforderlich ist, was bisher einen hohen Montageaufwand bedeutet und die Möglichkeiten zur Automatisierung beschränkt.

Die Aufgabe der Erfindung ist es, verbesserte Probenaufnahmeeinrichtungen (Probenbehälter, Kryosubstrate) bereitzustellen, mit denen die Nachteile der herkömmlichen Probenkammern überwunden werden und die sich insbesondere durch eine vereinfachte Herstellung und/oder eine verbesserte Handhabbarkeit bei der Probenbeschickung, beim Einfriervorgang und bei der Probenentnahme auszeichnen. Die Aufgabe der Erfindung ist es auch, verbesserte Verfahren zur Herstellung und/oder zur Anwendung von Probenaufnahmeeinrichtungen bereitzustellen, mit denen die Nachteile bei der Herstellung oder Verwendung herkömmlicher Probenkammern überwunden werden und die insbesondere eine kostengünstige, massenhafte Anwendung der Kryokonservierung ermöglichen.

Diese Aufgaben werden durch Probenaufnahmeeinrichtungen und Verfahren mit den Merkmalen der Patentansprüche 1 oder 18 gelöst. Vorteilhafte Ausführungsformen und Anwendungen der Erfindung ergeben sich aus den abhängigen Ansprüchen.

Die Erfindung basiert vorrichtungsbezogen auf der allgemeinen technischen Lehre, eine Probenaufnahmeeinrichtung mit einem ein Bündel aus hohlleitungsförmigen, insbesondere schlauch- oder rohrförmigen Probenkammern und einer Halteeinrichtung, mit der das Bündel der Probenkammern verbunden ist, dahingehend weiterzuentwickeln, dass die Halteeinrichtung durch einzelne, voneinander getrennte Halterahmen gebildet wird. Die erfindungsgemäße Bildung eines Verbundes aus Probenkammern und über deren Länge befestigte Halterahmen ermöglicht die Schaffung eines flexiblen und stabilen Gurtes oder Stranges, in dem die Probenkammern eine vorbestimmte Anordnung relativ zueinander besitzen. Der Gurt bildet zunächst ein Endlosband, aus dem je nach den Anforderungen einer konkreten Anwendung eine Probenaufnahmeeinrichtung, insbesondere für die Kryokonservierung biologischer Materialien mit den gewünschten Maßen abgetrennt werden kann. Die Halterahmen erleichtern des Weiteren die Schaffung eines kompakten, geringvolumigen Aufbaus der Probenaufnahmeeinrichtung, ohne dass die Aufnahmekapazität der Probenkammern eingeschränkt wird.

Die Halterahmen können jeweils aus umlaufenden Rahmenteilen bestehen und dienen als Halterung oder Träger von Probenkammerabschnitten zwischen den Rahmenteilen, zwischen denen die Probenkammern freitragend angeordnet sind. Durch diese Gestaltung können sich Vorteile für die Probenentnahme ergeben. Erfindungsgemäß wird ein Verbund aus dem Bündel von Probenkammern und den Halterahmen geschaffen, bei dem die Halterahmen durch die Probenkammern miteinander verbunden sind. Die hohlleitungsförmigen, insbesondere schlauch- oder rohrförmigen Probenkammern bilden das Endlosband und damit eine Basis oder Träger für die Halterahmen. Vorteilhafterweise kann auf zusätzliche Träger- oder Bandmaterialien verzichtet werden.

Das Bündel der Probenkammern ist eine Schar gleichartiger oder verschiedener, lang gestreckter Hohlkammern aus einem über die Länge des Bündels biegsamen Material. Wenn die Probenkammern einzelne, unabhängige Schläuche umfassen, können sich Vorteile für die Herstellung der Probenaufnahmeeinrichtung ergeben. Alternativ können an den Enden des Bündels alle Probenkammern oder Gruppen von Probenkammern verbunden sein, wobei sich Vorteile für die Beschickung der Probenaufnahmeeinrichtung ergeben können.

Ein Halterahmen ist ein tragendes oder stützendes gerüstartiges Bauteil aus umlaufenden Rahmenteilen, das die Probenkammern trägt. Zwischen den Rahmenteilen (zum Beispiel Stäbe) eines Halterahmens sind die Probenkammern freitragend angeordnet.

Wenn gemäß einer bevorzugten Ausführungsform der Erfindung die Halterahmen ebene Träger bilden, an denen die Probenkammern nebeneinander angeordnet sind, können sich Vorteile für die Beobachtung der Probenkammern und den Zugriff auf die Proben im gefrorenen Zustand ergeben. Die Halterahmen besitzen vorzugsweise eine rechteckige Form, in der die Probenkammern frei tragend und gerade verlaufend ausgerichtet sind.

Gemäß einer weiteren bevorzugten Ausführungsform der Erfindung können die Halterahmen voneinander beabstandet mit dem Bündel der Probenkammern verbunden sein. Diese Variante kann Vorteile in Bezug auf die Abtrennung einzelner Halterahmen vom Strang besitzen. Die Abstände zwischen den zueinander weisenden Rahmenteilen der Halterahmen sind in Abhängigkeit von den konkreten Anforderungen gewählt. Sie sind vorzugsweise größer als die 1-fache Dicke der Halterahmen.

Gemäß einer abgewandelten Ausführungsform der Erfindung kann vorgesehen sein, dass die Halterahmen als getrennte Teile, jedoch ohne Abstände entlang der Länge des Bündels angeordnet sind. Die zueinander weisenden Rahmenteile berühren sich gegenseitig. Die Halterahmen sind bündig zueinander angeordnet. Diese Ausführungsform kann insbesondere bei der Verwendung von Probenkammern aus gummielastischen Materialien Vorteile bei der Stapelbildung besitzen. Bei der Bildung eines Stapels durch gegenseitiges Umklappen von einzelnen Halterahmen kommt es zu einer Deformation und Abschnürung der Probenkammern zwischen den Halterahmen. Die Probenkammerabschnitte jeweils in benachbarten Halterahmen werden dadurch mechanisch voneinander getrennt.

Gemäß einer weiteren Ausführungsform der Erfindung kann vorgesehen sein, dass die Abstände der Halterahmen so gewählt sind, dass ein Halterahmen durch Umschwenken oder Umklappen auf den benachbarten Halterahmen aufgelegt werden kann, ohne dass die Probenkammern zwischen den Halterahmen beschädigt werden.

In einer besonders bevorzugten Realisierung der erfindungsgemäßen Probenaufnahmeeinrichtung sind die Halterahmen übereinander angeordnet, so dass sich vorteilhafterweise ein kompakter Aufbau bildet. Die Halterahmen bilden einen Stapel. Zur gegenseitigen Fixierung kann eine Klemmeinrichtung, zum Beispiel eine Klammer oder ein elastisches Band vorgesehen sein, mit denen die Halterahmen zusammengehalten werden.

Gemäß weiteren Varianten der Erfindung kann in wenigstens einem oder allen der Halterahmen jeweils ein integrierter elektronischer oder optischer Datenspeicher vorgesehen sein, so dass sich vorteilhafterweise die Funktionalität der Probenaufnahmeeinrichtung erweitern lässt. Zusätzlich oder alternativ kann entlang der Längsrichtung des Bündels der Probenkammern zwischen wenigstens zwei Halterahmen oder am Ende des Bündels wenigstens eine Datenspeichereinrichtung vorgesehen sein. Es können beispielsweise in jedem der o. g. Stapel mehrere Halterahmen und mindestens eine Datenspeichereinrichtung enthalten sein.

Generell können erfindungsgemäß Probenkammern mit allen Formen verwendet werden, die für die konkrete Anwendung gewünscht sind. In vielen Fällen besitzen die Probenkammern entlang ihrer Länge eine homogene Form und insbesondere eine gleich bleibenden, zum Beispiel runde Querschnittsfläche. Besondere Vorteile des erfindungsgemäßen Verbundes aus mindestens zwei lang gestreckten Probenkammern mit einer Folge von Halterahmen können sich ergeben, wenn die Probenkammern eine in Bezug auf ihre Längsausdehnung nicht-rotationssymmetrische Querschnittsfläche und/oder eine entlang ihrer Längsausdehnung veränderliche Querschnittsfläche besitzen. In diesem Fall kann mit den Halterahmen eine vorgegebene relative Ausrichtung der Probenkammern innerhalb des Bündels und/oder über die gesamte Länge der Probenkammern erhalten werden.

Wenn die Probekammern gemäß einer ersten Variante einen rechteckigen Querschnitt aufweisen, werden im Wesentlichen ebene Seitenflächen der Probenkammern geschaffen, woraus sich Vorteile für die Beobachtung oder Messung an Proben ergeben können. Besonders vorteilhaft ist es, wenn alle Probekammern so an den Halterahmen befestigt sind, dass jeweils eine ebene Seitenfläche der Probekammern parallel zur ebenen Ausdehnung der Halterahmen ausgerichtet ist.

Wenn die Probekammern gemäß einer weiteren Variante einen Querschnitt aufweisen, der sich entlang der Länge der Probekammern verändert, können sich Kammerabschnitte mit einer größeren und einer kleineren Querschnittsfläche abwechseln, so dass vorteilhafterweise Kompartimente oder Teilkammern geschaffen werden. Die Kompartimente können die Probenentnahme insbesondere im gefrorenen Zustand erleichtern. Bevorzugt wird der Querschnitt der Probekammern periodisch verändert, so dass sich eine Vielzahl von Kompartimenten bilden.

Alternativ können Probenkammern vorgesehen sein, die durch mindestens eine Kammerwand in mindestens zwei langgestreckte, sich über die Bündellänge erstreckende Teilkammern unterteilt sind. Derartige Probenkammern sind beispielsweise Mehrfach-Verbundschläuche. Die Unterteilung in Teilkammern kann für spezielle Speichertechniken vorteilhaft sein, um beispielsweise Proben und Referenzproben in einem festen Verbund einzufrieren. Wenn gemäß einer weiteren Modifizierung die Kammerwand teildurchlässig ist, kann ein Stoffaustausch zwischen den Teilkammern insbesondere vor dem Einfrieren oder nach dem Auftauen realisiert werden. Die Teildurchlässigkeit wird vorzugsweise durch die Verwendung einer Kammerwand mit Poren, wie z. B. in einem Filtermaterial oder einer Dialysemembran aufweist.

Die Erfindung basiert verfahrensbezogen auf der allgemeinen technischen Lehre, eine erfindungsgemäße Probenaufnahmeeinrichtung durch eine gleichzeitige Bereitstellung einer Vielzahl von Probenkammern, zum Beispiel durch Abziehen der Probenkammern von Vorratsrollen oder durch parallele Formung (Produktion z.B. mit mehreren Extrudern), Positionieren der Halterahmen und Aufwickeln des Verbundes aus Probenkammern und Halterahmen gelöst. Dieses Verfahren besitzt den Vorteil, dass hohlleitungsförmige Probenkammern mit erheblichen Längen, z.B. von einigen Metern oder einigen 10 Metern, ohne die Gefahr einer unerwünschten Schleifenbildung oder Verwicklung zu kompakten Probenaufnahmeeinrichtungen verbunden werden können.

Wenn gemäß einer bevorzugten Ausführungsform der Erfindung die Halterahmen aus Kunststoff durch Spritzguss an den Probenkammern angebracht werden, kann die Produktion der erfindungsgemäßen Probenaufnahmeeinrichtung vorteilhafterweise weiter vereinfacht werden.

Vorteilhafte Ausführungsformen und Anwendungen der Erfindung werden im folgenden unter Bezug auf die beigefügten Zeichnungen beschrieben. Es zeigen:
- Figur 1:: eine schematische Darstellung einer erfindungsgemäßen Probenaufnahmeeinrichtung,
- Figur 2:: eine erfindungsgemäßen Probenaufnahmeeinrichtung mit einem Halterahmenstapel,
- Figur 3:: eine von der Probenaufnahmeeinrichtung abgetrennte Teilprobe,
- Figur 4:: verschiedene Formen von Probenkammern,
- Figuren 5, 6:: Illustrationen der Herstellung der erfindungsgemäßen Probenaufnahmeeinrichtung, und
- Figur 7:: eine herkömmlichen Probenaufnahme mit Schläuchen (Stand der Technik).

Die Erfindung wird im folgenden unter beispielhaftem Bezug auf Probenaufnahmeeinrichtungen mit Schlauch-Probenkammern für die Kryokonservierung biologischer Materialien beschrieben. Einzelheiten der Kryokonservierung, insbesondere mit einer Proben- und Datenspeicherung sind an sich aus dem Stand der Technik bekannt. Diese Einzelheiten werden daher, soweit sie nicht für die Umsetzung der Erfindung von Bedeutung sind, hier nicht gesondert beschrieben.

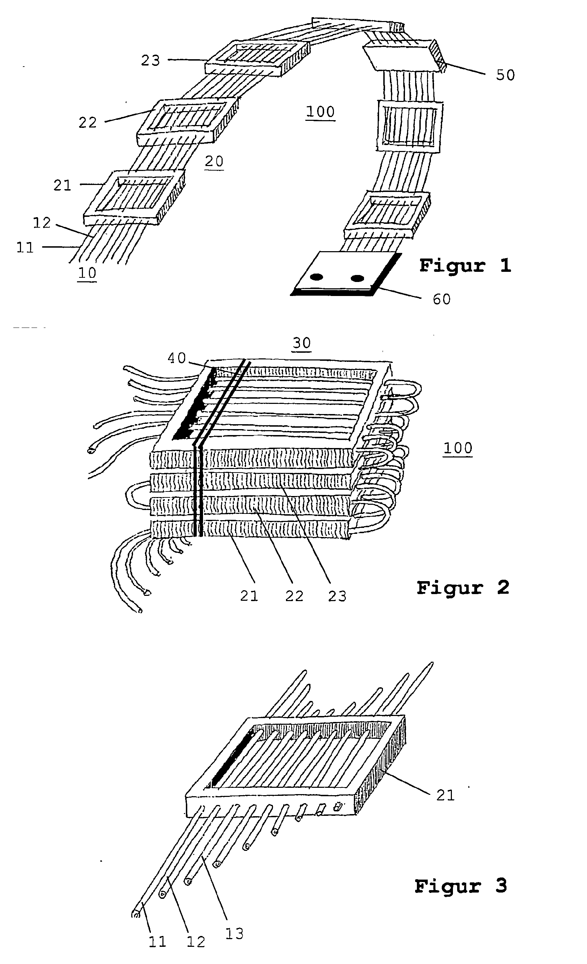

Die erfindungsgemäße Probenaufnahmeeinrichtung 100 umfasst gemäß Figur 1 das Bündel 10 der Probenkammern 11, 12, ... und die Halteeinrichtung 20. Die Probenkammern 11, 12, ... sind eine Vielzahl von hohlen Flüssigkeitsleitungen, die aus einem biegsamen, flexiblen Material bestehen. Die Flexibilität ist insbesondere bei Kunststoff, zum Beispiel HDPE oder PTFE gegeben, kann aber auch bei genügend geringen Wandstärken bei Metallen, zum Beispiel Au, Stahl oder Halbleitermaterialien, zum Beispiel Si oder Verbundmaterialien ausreichen, um insbesondere die unten beschriebenen Rollen- oder Stapelanordnungen ohne eine Beschädigung der Probenkammern zu realisieren. Die Innendurchmesser der Probenkammern können im Bereich von wenigen µm bis zum Beispiel 15 mm liegen. Die Wandstärke der Probenkammern kann ebenfalls in diesem Bereich variiert werden, wobei sie in der Regel so gering ausgelegt wird, dass die Probenkammern im gefrorenen (festen) Zustand zur Probenentnahme durchtrennt werden können. Die Zahl der Probenkammern ist vorzugsweise an die in der Biotechnologie gebräuchlichen Formate angepasst und liegt zum Beispiel im Bereich zwischen 96 und 256, kann aber auch darunter (wie dargestellt) oder darüber gewählt sein.

Die Halteeinrichtung 20 umfasst die Halterahmen 21, 22, ..., die entlang der Längsausdehnung des Bündels 10 mit vorbestimmten Rahmenabständen angeordnet sind. Die Halterahmen 21, 22, ... umfassen Rahmenteile mit zwei Längs-Rahmenteilen und zwei Quer-Rahmenteilen, die parallel und quer zur Längsrichtung des Bündels 10 ausgerichtet sind und ein Rechteck bilden. Die Halterahmen 21, 22, ... bestehen aus Kunststoff, zum Beispiel PE (insb. HDPE), PTFE, TPX. Die Probenkammern sind durch Spritzguss an die Halterahmen angeformt (siehe unten).

Die Größe der Halterahmen 21, 22, ... ist je nach der Anwendung und insbesondere der Zahl der Probenkammern gewählt. Die Länge der Längs-Rahmenteile kann beispielsweise im Bereich von 10 mm bis 20 cm gewählt sein, während die Länge der Quer-Rahmenteile für die Aufnahme von wenigstens zwei Probenkammern ausgelegt und im Bereich von 5 mm bis 20 cm gewählt ist. Die Dicke der Halterahmen beträgt beispielsweise rund 0,5 bis 10 mm. Die Abstände benachbarter Halterahmen sind beispielsweise im Bereich von der mindestens 1-fachen Dicke der Halterahmen, insbesondere 10 mm bis 100 mm gewählt.

Zwischen zwei Halterahmen ist an der Probenaufnahmeeinrichtung 100 eine Datenspeichereinrichtung 50 gezeigt, der einen Datenspeicher in einer Kunststoffverkapselung mit einer Größe zeigt, die an die Maße der Halterahmen angepasst ist. Die Gestaltung und Funktion der Datenspeichereinrichtung 50 ist an sich bereits bekannt, so dass hier keine weiteren Einzelheiten genannt sind.

Die Probenaufnahmeeinrichtung 100 kann zur Kryokonservierung in einem Behälter mit ausreichend geringer Temperatur (zum Beispiel Temperatur des flüssigen Stickstoffs oder seines Dampfes) frei hängend angeordnet sein. In diesem Fall kann an einem Ende des Bündels 10 ein Endstück 60 zur Aufhängung der Probenaufnahmeeinrichtung 100 im Kryo-Behälter vorgesehen sein.

Abweichend von der illustrierten Ausführungsform der Erfindung können die Halterahmen mit verschiedenen Größen, anderen geometrischen Formen (zum Beispiel andere Vieleckformen oder runde Halterahmen) oder einer veränderten Ausrichtung relativ zur Bündellängsrichtung vorgesehen sein. Des weiteren kann das Bündel 10 in Teilbündel jeweils mit kleineren Halterahmen unterteilt sein, die zum Teil mit gemeinsamen Halterahmen zu einem Hauptbündel vereint sind. Des weiteren können nichtebene Halterahmen vorgesehen sein.

Figur 2 zeigt die Probenaufnahmeeinrichtung 100 mit der Anordnung der Halterahmen 21, 22, ... als Stapel 30. Es werden beispielsweise 2 bis 10 Halterahmen, ggf. mit mindestens einer Datenspeichereinrichtung zum Stapel 30 verbunden. Der Zusammenhalt im Stapel 30 wird erzielt, indem die Halterahmen durch ein mindestens ein elastisches Band 40 oder mindestens eine Klammer (nicht dargestellt) zusammengehalten werden.

Die Probenkammern durchziehen den gesamten Stapel 30. Zur Probenbeschickung können die unteren Enden der Probenkammern mit Vorratsreservoiren zum Beispiel in einer Mikro- oder Nanotiterplatte und die entgegen gesetzten Enden mit einer Saugeinrichtung verbunden werden. Im gefrorenen Zustand können die zwischen den Halterahmen gebildeten Schleifen der Probenkammern unterbrochen werden, wodurch ggf. die Probenentnahme erleichtert werden kann.

Alternativ können Halterahmen mit aufgereihten Probenkammern, insbesondere im gefrorenen Zustand einzeln von der Probenaufnahmeeinrichtung 100 abgetrennt werden. Beispielsweise zeigt Figur 3 einen einzelnen Halterahmen 21 mit mehreren Probenkammern 11, 12 .... Außerhalb des Halterahmens ragen die Probenkammern 11, 12 ... mit verschiedenen Längen hervor, was Vorteile für die Probenentnahme oder Probenablage haben kann. Die Enden der abstehenden Probenkammern bilden eine bestimmte Kurvenform, deren Gestalt durch ein Schneidwerkzeug zur Abtrennung des einzelnen Substrats gemäß Figur 3 von der Probenaufnahmeeinrichtung 100 bestimmt und in Abhängigkeit von den Anforderungen einer konkreten Kryokonservierungsaufgabe gewählt wird.

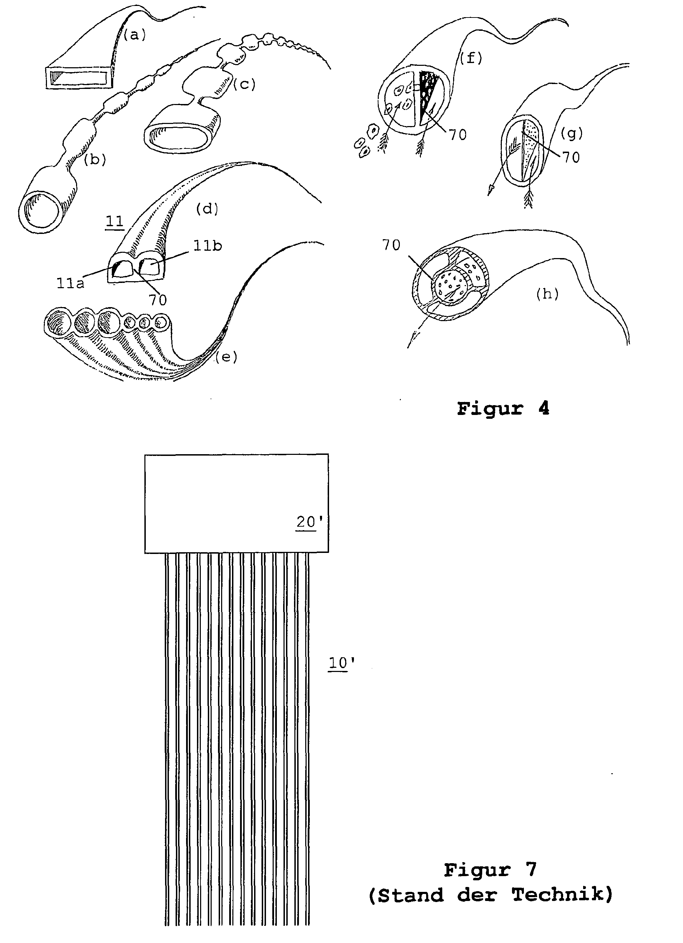

In Figur 4 sind erfindungsgemäß verwendete Probenkammern mit nicht-rotationssymmetrischen Querschnittsflächen oder in Längsrichtung gebildeten Kompartimenten beispielhaft illustriert. Die von der Zylinderform abweichende Ausführung der Proben-Hohlkammern kann für spezielle Messaufgaben oder eine mikroskopische Beobachtung der Proben, insbesondere von Zellen im Inneren der Probenkammern von Bedeutung sein. Es können insbesondere Probenkammern mit einer rechteckigen Querschnittsfläche (Teilbild a) mit einer in Längsrichtung periodisch variierenden, runden (Teilbild b) oder nicht-runden (Teilbild c) Querschnittsfläche oder eine Verbundstruktur mit mehreren, in Längsrichtung verbundenen Teilkammern (Teilbilder d, e) vorgesehen sein. Die rechteckige Kammer von (a) erleichtert optische Beobachtungen an der Probe. Die Kompartimentierung (Schaffung von aufgereihten Teilkammern, die durch Einschnürungen voneinander getrennt sind) dient der selektiven Entnahme von Kammerteilen im gefrorenen Zustand.

Die Unterteilung z.B. der Probenkammer 11 (Teilbild d) in zwei Teilkammern 11a, 11b, die durch die Kammerwand 70 getrennt sind, liefert besondere Vorteile, wenn die Kammerwand 70 teildurchlässig ist, so dass ein Stoffaustausch zwischen beiden Teilkammern 11a, 11b realisiert werden kann. Beispielsweise werden in die Teilkammer 11a eine Zellsuspension und in die Teilkammer 11b eine Nährlösung mit einem Kryoprotektivum eingeführt. In Abhängigkeit von einer Zeitverzögerung zwischen der Beschickung der Teilkammern 11a, 11b bis zum Einfriervorgang kann eingestellt werden, wie viel Kryoprotektivum in die Zellsuspension diffundiert. Andererseits kann beim Auftauvorgang durch ein Durchströmen der zweiten Teilkammer 11b mit einer Waschlösung das Kryoprotektivum aus der Zellsuspension in der ersten Teilkammer 11a mittels Diffusion abgezogen werden. Vorteilhafterweise wird dabei die bisher übliche Zentrifugation von Zellen vermieden, die zu einer Schädigung an aufgetauten Zellen führen kann. Die bandartige Kombination von Probenkammern gemäß Teilbild e ermöglicht, dass in jeder Teilkammer bestimmte Zellen untergebracht werden, die erst nach dem Auftauen in Kontakt gebracht werden sollen (z.B. Stammzellen mit Ammenzellen etc.).

Die Wandkammer 70 kann sich längs durch die Probenkammer 11 erstrecken und dabei eine einfache Trennwand (Teilbilder f, g) oder ein komplexeres Gebilde (Teilbild a) formen. Die Kammerwand 70 kann mit Poren (Teilbild f) oder wie eine Dialysemembran (Teilbild g) für bestimmte Probenbestandteile durchlässig gestaltet sein. Die Poren oder Durchbrechungen können Durchmesser von einigen Mikrometern oder weniger aufweisen, so dass Zellen die Trennwand nicht passieren können. Wenn dieser Übergang gerade erwünscht ist, werden die Poren größer gewählt. Die Teilbilder f und g zeigen, dass bei der Probenbeschickung oder bei der Probenbehandlung nach dem Auftauen die Teilkammern durch die beteiligten Suspensionen und Lösungen gleich- oder gegensinnig durchströmt werden können. Erfindungsgemäß kann vorgesehen sein, dass die Probenkammern an sich aus Zellulosemembranen oder aus Dialysemembranen aufgebaut sind.

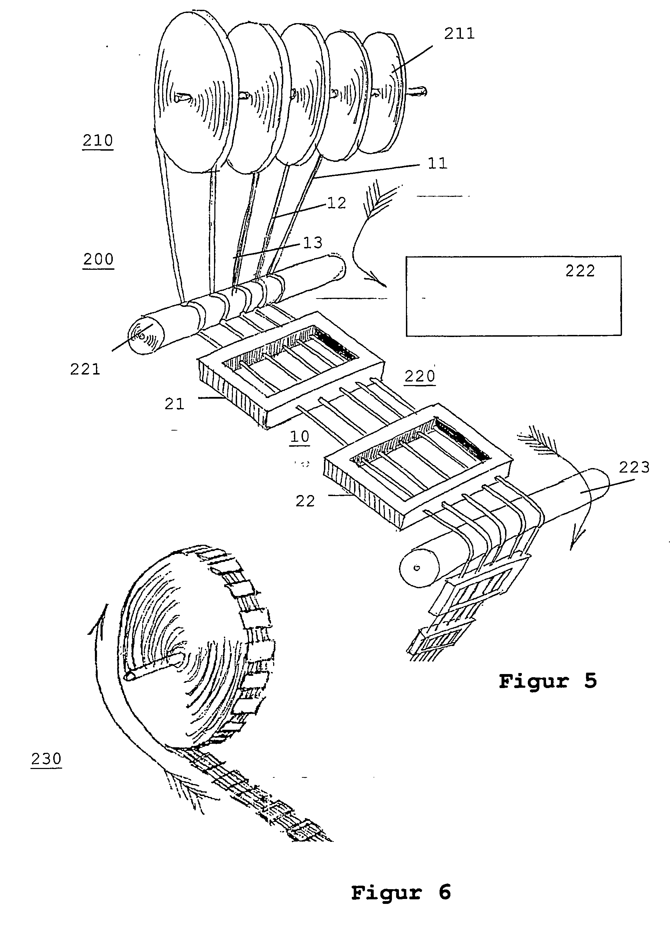

Die Figuren 5 und 6 zeigen das Prinzip einer Vorrichtung 200 zur Herstellung der erfindungsgemäßen Probenaufnahmeeinrichtung 100 als Endlos-Kryosubstrat. Die Vorrichtung 200 umfasst eine Baugruppe 210 zur Bereitstellung der Probenkammern, eine Fixiereinrichtung 220 zur Befestigung der Halterahmen und eine Sammeleinrichtung 230 zur Aufnahme der Probenaufnahmeeinrichtung 100. Die Baugruppe 210 umfasst beim dargestellten Ausführungsbeispiel Vorratsrollen 211, auf denen jeweils Probenkammern aufgewickelt sind. Die Zahl der Vorratsrollen 211 entspricht der Zahl der im Bündel 10 zu verbindenden Probenkammern. Alternativ kann eine Extruderanordnung vorgesehen sein, an der die Probenkammern nach an sich bekannten Techniken zur Schlauchproduktion hergestellt werden.

Die Fixiereinrichtung 220 umfasst eine erste und eine zweite Justiereinrichtung 221, 223 zur gegenseitigen Ausrichtung der Probenkammern im Bündel 10 und eine schematisch gezeigte Fügeeinrichtung 222 zur Anbringung der Halterahmen 21, 22, ... Die Justiereinrichtung 221, 223 umfasst beim dargestellten Ausführungsbeispiel zwei Walzen, die ggf. mit einer strukturierten Oberfläche ausgestattet sind und die Abstände der Probenkammern auf den Halterahmen vorgeben.

Von den Vorratsrollen 211 laufen Schläuche oder andere hohle Bandsysteme, die die Probenkammern bilden, über die ersten Justiereinrichtung 221, von der die Schläuche parallel und frei aufgespannt durch die Fixiereinrichtung 220 bis zur zweiten Justiereinrichtung 221 laufen. Mit der Fügeeinrichtung 222 werden die Probenkammern mit einem an sich bekannten Spritzgussverfahren oder Kunststoff-Fügeverfahren in die Halterahmen 21, 22 eingefügt oder die Halterahmen an die Probenkammern angeformt. Wenn die Halterahmen als Klemmrahmen aus jeweils zwei Halbrahmen gebildet sind, zwischen denen die Probenkammern eingeklemmt werden, kann an der Fügeeinrichtung 222 ein mechanisches Zusammensetzen der Halbrahmen von beiden Seiten der aufgespannten Probenkammern her vorgesehen sein.

Die Halterahmen fixieren die Probenkammern in der fest aufgespannten, geraden Form. Die Fixierung ist bei der Kryokonservierung zunächst unlösbar, kann aber beispielsweise zur Probenentnahme mit speziell angepassten Werkzeugen aufgebrochen werden. Über die zweite Justiereinrichtung 223 läuft der Verbund aus Probenkammern und Halterahmen auf die Sammeleinrichtung 230, die beispielsweise eine Sammelrolle umfasst.

Die Sammeleinrichtung 230 mit der aufgewickelten Probenaufnahmeeinrichtung 100 stellt eine Ausführungsform der Erfindung dar, die als fertiges Produkt an den Nutzer verschickt werden kann. Je nach den konkreten Anforderungen kann dann ein einzelner Halterahmen mit den aufgespannten Probenkammern oder ein Strang mit mehreren Halterahmen abgetrennt werden. Die Probenbeschickung kann im aufgerollten oder abgetrennten Zustand der Probenaufnahmeeinrichtung erfolgen.

Die in der vorstehenden Beschreibung, den Ansprüchen und den Zeichnungen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Probenaufnahmeeinrichtung (100), insbesondere zur Kryokonservierung mindestens einer Probe, umfassend:
- ein Bündel (10) aus einer Vielzahl von schlauchförmigen, flexiblen Probenkammern (11, 12, ...), und
- eine Halteeinrichtung (20), mit der das Bündel (10) der Probenkammern verbunden ist,
**dadurch gekennzeichnet, dass**
- die Halteeinrichtung (20) eine Vielzahl von Halterahmen (21, 22, ...) mit Rahmenteilen aufweist, zwischen denen die Probenkammern freitragend angeordnet sind, wobei die Halterahmen (21, 22, ...) in einer Längsrichtung des Bündels (10) angeordnet sind.

2. Probenaufnahmeeinrichtung nach Anspruch 1, bei der die Halterahmen (21, 22, ...) ebene Träger bilden, an denen die Probenkammern (11, 12, ...) nebeneinander angeordnet sind.

3. Probenaufnahmeeinrichtung nach Anspruch 1 oder 2, bei der die Halterahmen (21, 22, ...) eine rechteckige Form bilden.

4. Probenaufnahmeeinrichtung nach mindestens einem der vorhergehenden Ansprüche, bei der zwischen den Halterahmen (21, 22, ...) Abstände gebildet sind.

5. Probenaufnahmeeinrichtung nach Anspruch 4, bei der die Abstände größer als die 1-fache Dicke der Halterahmen ist.

6. Probenaufnahmeeinrichtung nach einem der Ansprüche 1 bis 3, bei der die Halterahmen (21, 22, ...) bündig aneinandergrenzend in der Längsrichtung des Bündels (10) angeordnet sind.

7. Probenaufnahmeeinrichtung nach mindestens einem der Ansprüche 4 bis 6, bei der die Halterahmen (21, 22, ...) einen Stapel (30) bilden.

8. Probenaufnahmeeinrichtung nach Anspruch 7, bei der die Halterahmen (21, 22, ...) im Stapel (30) durch eine Klemmeinrichtung zusammengehalten werden.

9. Probenaufnahmeeinrichtung nach mindestens einem der vorhergehenden Ansprüche, bei der wenigstens einer der Halterahmen (21, 22, ...) einen integrierten Datenspeicher enthält.

10. Probenaufnahmeeinrichtung nach Anspruch 9, bei der alle Halterahmen (21, 22, ...) jeweils einen integrierten Datenspeicher enthalten.

11. Probenaufnahmeeinrichtung nach mindestens einem der vorhergehenden Ansprüche, bei der entlang der Längsrichtung des Bündels (10) der Probenkammern (11, 12, ...) zwischen wenigstens zwei Halterahmen wenigstens eine Datenspeichereinrichtung (50) vorgesehen ist.

12. Probenaufnahmeeinrichtung nach mindestens einem der vorhergehenden Ansprüche, bei der die Probekammern (11, 12, ...) einen rechteckigen Querschnitt aufweisen.

13. Probenaufnahmeeinrichtung nach Anspruch 12, bei der alle Probekammern so an den Halterahmen (21, 22, ...) befestigt sind, dass jeweils eine ebene Seitenfläche der Probekammern parallel zur ebenen Ausdehnung der Halterahmen ausgerichtet ist.

14. Probenaufnahmeeinrichtung nach mindestens einem der vorhergehenden Ansprüche 1 bis 11, bei der die Probekammern einen Querschnitt aufweisen, der sich entlang der Länge der Probekammern verändert.

15. Probenaufnahmeeinrichtung nach Anspruch 14, bei der sich der Querschnitt der Probekammern periodisch verändert.

16. Probenaufnahmeeinrichtung nach mindestens einem der vorhergehenden Ansprüche, bei der die Probekammern (11, 12, ...) entlang ihrer Länge durch mindestens eine Kammerwand (70) in mindestens zwei Teilkammern (11a, 11b, 12a, 12b,...) unterteilt sind.

17. Probenaufnahmeeinrichtung nach Anspruch 16, bei der die Kammerwand (70) Poren aufweist oder eine Dialysemembran ist.

18. Verfahren zur Herstellung einer Probenaufnahmeeinrichtung nach mindestens einem der vorhergehenden Ansprüche, mit den Schritten:
- Bereitstellung oder Formung der Probenkammern (11, 12,...),
- Formung des Bündels (10) der Probenkammern (11, 12, ...), und
- Anbringung der Halterahmen (21, 22, ...) in der Längsrichtung des Bündels (10).

19. Verfahren nach Anspruch 18, bei dem die Bereitstellung der Probenkammern (11, 12 ...) ein Abwickeln von Vorratsrollen (211) umfasst.

20. Verfahren nach Anspruch 19, bei dem die Formung des Bündels (10) der Probenkammern (11, 12 ...) ein gleichzeitiges Ziehen der Probenkammern (11, 12 ...) von den Vorratsrollen (211) umfasst.

21. Verfahren nach Anspruch 18, bei dem die Formung der Probenkammern (11, 12 ...) eine parallele Extrusion von Schläuchen umfasst.

22. Verfahren nach mindestens einem der Ansprüche 18 bis 21, bei dem die Halterahmen mit einem Spritzgussverfahren oder einem Klemmverfahren an den Probenkammern (11, 12, ...) angebracht werden.

23. Verfahren nach mindestens einem der Ansprüche 18 bis 22, mit dem weiteren Schritt Aufwickeln des Verbundes aus Probenkammern und Halterahmen.

## Claims

1. Sample receiving device (100), in particular for cryopreservation of at least one sample, comprising:
- a bundle (10) comprising a multiplicity of hose-shaped flexible sample chambers (11, 12, ...), and
- a holding device (20) to which the bundle (10) of sample chambers is connected,
**characterised in that**
- the holding device (20) has a multiplicity of holding frames (21, 22, ...) with frame parts, between which the sample chambers are disposed in a self-supporting manner, the holding frames (21, 22, ...) being disposed in a longitudinal direction of the bundle (10).

2. Sample receiving device according to claim 1, in which the holding frames (21, 22, ...) form planar carriers on which the sample chambers (11, 12, ...) are disposed adjacent to each other.

3. Sample receiving device according to claim 1 or 2, in which the holding frames (21, 22, ...) form a rectangular shape.

4. Sample receiving device according to at least one of the preceding claims, in which spacings are formed between the holding frames (21, 22, ...).

5. Sample receiving device according to claim 4, in which the spacings are greater than 1 times the thickness of the holding frames.

6. Sample receiving device according to one of the claims 1 to 3, in which the holding frames (21, 22, ...) are disposed in a flush manner and adjacent to each other in the longitudinal direction of the bundle (10).

7. Sample receiving device according to at least one of the claims 4 to 6, in which the holding frames (21, 22, ...) form a stack (30).

8. Sample receiving device according to claim 7, in which the holding frames (21, 22, ...) are held together in the stack (30) by means of a clamping device.

9. Sample receiving device according to at least one of the preceding claims in which at least one of the holding frames (21, 22, ...) contains an integrated data logger.

10. Sample receiving device according to claim 9, in which all the holding frames (21, 22, ...) contain respectively an integrated data logger.

11. Sample receiving device according to at least one of the preceding claims, in which there is provided at least one data logging device (50) along the longitudinal direction of the bundle (10) of the sample chambers (11, 12, ...) between at least two holding frames.

12. Sample receiving device according to at least one of the preceding claims, in which the sample chambers (11, 12, ...) have a rectangular cross-section.

13. Sample receiving device according to claim 12, in which all the sample chambers are mounted on the holding frames (21, 22, ...) such that one planar lateral side respectively of the sample chambers is aligned parallel to the planar extension of the holding frames.

14. Sample receiving device according to at least one of the preceding claims 1 to 11, in which the sample chambers have a cross-section which changes along the length of the sample chambers.

15. Sample receiving device according to claim 14, in which the cross-section of the sample chambers changes periodically.

16. Sample receiving device according to at least one of the preceding claims, in which the sample chambers (11, 12, ...) are subdivided along their length into at least two partial chambers (11a, 11b, 12a, 12b, ...) by means of at least one chamber wall (70).

17. Sample receiving device according to claim 16, in which the chamber wall (70) has pores or is a dialysis membrane.

18. Method for producing a sample receiving device according to at least one of the preceding claims, with the steps
- preparing or forming the sample chambers (11, 12, ...),
- forming the bundle (10) of sample chambers (11, 12, ...), and
- attaching the holding frames (21, 22, ...) in the longitudinal direction of the bundle (10).

19. Method according to claim 18, in which the preparation of the sample chambers (11, 12, ...) includes unwinding from supply rollers (211).

20. Method according to claim 19, in which the formation of the bundle (10) of the sample chambers (11, 12, ...) includes a simultaneous drawing of the sample chambers (11, 12, ...) from the supply rollers (211).

21. Method according to claim 18, in which the formation of the sample chambers (11, 12, ...) includes a parallel extrusion of hoses.

22. Method according to at least one of the claims 18 to 21, in which the holding frames are attached to the sample chambers (11, 12, ...) by an injection moulding process or a clamping process.

23. Method according to at least one of the claims 18 to 22, with the further step of winding up the composite comprising sample chambers and holding frames.

## Revendications

1. Dispositif de réception d'échantillons (100), en particulier pour la conservation cryogénique d'au moins un échantillon, comprenant :
- un faisceau (10) constitué d'une pluralité de chambres d'échantillons flexibles tubulaires (11, 12, ...) et
- un dispositif de retenue (20) avec lequel le faisceau (10) de chambres d'échantillons est relié,
**caractérisé en ce que**
- le dispositif de retenue (20) comporte une pluralité de cadres de retenue (21, 22, ...) avec des éléments de cadres entre lesquels les chambres d'échantillons sont disposées en porte-à-faux, les cadres de retenue (21, 22, ...) étant disposés dans une direction longitudinale du faisceau (10).

2. Dispositif de réception d'échantillons selon la revendication 1, dans lequel les cadres de retenue (21, 22, ...) forment des supports plans sur lesquels les chambres d'échantillons (11, 12, ...) sont disposées les unes à côté des autres.

3. Dispositif de réception d'échantillons selon la revendication 1 ou 2, dans lequel les cadres de retenue (21, 22, ...) forment une forme rectangulaire.

4. Dispositif de réception d'échantillons selon au moins l'une quelconque des revendications précédentes, dans lequel des intervalles sont formés entre les cadres de retenue (21, 22, ...).

5. Dispositif de réception d'échantillons selon la revendication 4, dans lequel les intervalles sont supérieurs à 1 fois l'épaisseur des cadres de retenue.

6. Dispositif de réception d'échantillons selon l'une quelconque des revendications 1 à 3, dans lequel les cadres de retenue (21, 22, ...) sont contigus et au même niveau dans la direction longitudinale du faisceau (10).

7. Dispositif de réception d'échantillons selon l'une quelconque des revendications 4 à 6, dans lequel les cadres de retenue (21, 22, ...) forment une pile (30).

8. Dispositif de réception d'échantillons selon la revendication 7, dans lequel les cadres de retenue (21, 22, ...) sont assemblés dans la pile (30) à l'aide d'un dispositif de serrage

9. Dispositif de réception d'échantillons selon au moins l'une quelconque des revendications précédentes, dans lequel au moins l'un des cadres de retenue (21, 22, ...) renferme une mémoire de données intégrée.

10. Dispositif de réception d'échantillons selon la revendication 9, dans lequel tous les cadres de retenue (21, 22, ...) renferment chacun une mémoire de données intégrée.

11. Dispositif de réception d'échantillons selon au moins l'une quelconque des revendications précédentes, dans lequel il est prévu au moins un dispositif de mémoire de données (50) le long de la direction longitudinale du faisceau (10) des chambres d'échantillons (11, 12, ...) entre au moins deux cadres de retenue.

12. Dispositif de réception d'échantillons selon au moins l'une quelconque des revendications précédentes, dans lequel les chambres d'échantillons (11, 12, ...) présentent une section transversale rectangulaire.

13. Dispositif de réception d'échantillons selon la revendication 12, dans lequel toutes les chambres d'échantillons sont fixées aux cadres de retenue (21, 22, ...) de telle manière qu'une face latérale plane des chambres d'échantillons est orientée parallèlement à l'extension plane des cadres de retenue.

14. Dispositif de réception d'échantillons selon au moins l'une quelconque des revendications précédentes 1 à 11, dans lequel les chambres d'échantillons présentent une section transversale qui varie le long de la longueur des chambres d'échantillons.

15. Dispositif de réception d'échantillons selon la revendication 14, dans lequel la section transversale des chambres d'échantillons varie périodiquement.

16. Dispositif de réception d'échantillons selon au moins l'une quelconque des revendications précédentes, dans lequel les chambres d'échantillons (11, 12, ...) sont divisées, le long de leur longueur, en au moins deux chambres partielles (11a, 11b, 12a, 12b,...) par au moins une paroi de chambre (70).

17. Dispositif de réception d'échantillons selon la revendication 16, dans lequel la paroi de chambre (70) comporte des pores ou est une membrane de dialyse.

18. Procédé pour la fabrication d'un dispositif de réception d'échantillons selon au moins l'une quelconque des revendications précédentes, avec les étapes suivantes :
- fourniture ou façonnage des chambres d'échantillons (11, 12, ...),
- façonnage du faisceau (10) des chambres d'échantillons (11, 12, ...), et
- montage des cadres de retenue (21, 22, ...) dans la direction longitudinale du faisceau (10).

19. Procédé selon la revendication 18, dans lequel la fourniture des chambres d'échantillons (11, 12, ...) comprend un déroulement de rouleaux d'alimentation (211).

20. Procédé selon la revendication 19, dans lequel le Façonnage du faisceau (10) des chambres d'échantillons (11, 12, ...) comprend une traction concomitante des chambres d'échantillons (11, 12, ...) par les rouleaux d'alimentation (211).

21. Procédé selon la revendication 18, dans lequel le façonnage des chambres d'échantillons (11, 12,...) comprend une extrusion parallèle de tuyaux souples.

22. Procédé selon au moins l'une quelconque des revendications 18 à 21, dans lequel les cadres de retenue sont montés sur les chambres d'échantillons (11, 12,...) à l'aide d'un procédé de moulage par injection ou d'un procédé de serrage.

23. Procédé selon au moins l'une quelconque des revendications 18 à 22, avec l'étape ultérieure d'enroulement du composite hors des chambres d'échantillons et des cadres de retenue.
